# EUROPEAN PATENT SPECIFICATION

(11) **EP 0 768 508 B1**
(45) Date of publication and mention of the grant of the patent: **24.07.2002**
(21) Application number: 96307422.4
(22) Date of filing: 11.10.1996
(51) Int. Cl.: F41J 9/10

(54) **Drag-producing aerodynamic device**
Widerstandsbildende aerodynamische Vorrichtung
Dispositif aérodynamique avec traînée

(30) Priority: 13.10.1995 GB 9521045
(43) Date of publication of application: 16.04.1997
(73) Proprietor: BAE Systems Electronics Ltd., Farnborough, Hampshire GU14 6YU (GB)
(72) Inventor: Frank, Stephen Jeffrey, Buckingham, Bucks. MK18 7ET (GB); Hawkins, David, Radlett, Herts., WD7 8BD (GB)
(74) Representative: Fletcher Watts, Susan J.

(56) References cited:
- DE-A- 2 613 953
- US-A- 5 029 773

## Description

This invention relates to drag-producing aerodynamic devices.

Such devices are used to provide stability to a body being towed e.g. by an aircraft in flight. It is known to use a rigid cone for such a purpose. However, a cone of small diameter, which is suitable for stabilising a body being towed at high speed, is not ideally suited to low speed towing as it does not provide sufficient drag to stabilise the towed body against disturbances caused by induced oscillations propagated down the towing cable. Equally, a cone of large diameter which is suitable for the latter situation, can cause too much drag at high speed, which can place excessive strain on the towing cable.

US 5,029,773 discloses a decoy having pivotably-mounted, drag-producing fins. The decoy is ejected from a canister and drag causes rapid extension of the fins to render the decoy aerodynamically stable. The sweepback angle of the fins, and hence the drag, is controlled by elastic restraints on the fins.

The invention provides a drag-producing device for providing stability to a towed body, the device comprising:-
a sleeve; and
a plurality of drag-producing blades each pivotably attached at one end portion to the sleeve, the other end portions lying on a circle, each blade extending rearwardly in use;
characterised in that the device further comprises resilient means resting against the sleeve, the sleeve moving forwardly against the force of the resilient means as drag acting on the blades increases thereby reducing the diameter of the circle on which the other end portions lie and hence the drag.

The cross-sectional area defined by the drag-producing blades is variable, which enables the device to produce the optimum amount of drag for the circumstances of towing. Furthermore, when in storage, the device occupies minimum volume and thus the storage container can be made smaller than was necessary for rigid cones.

The resilient means is advantageously provided by a helical spring. The sleeve preferably surrounds the main tubular body of the device which is attached to the towed body. The body includes a collar, the helical spring being retained between the sleeve and the collar on the body. A ring may be provided, mounted on an coaxially with the main tubular body of the device. This ring permits the means which pivotably fix the blades to the sleeve to act as cams for the blades. Means may also be provided to restrict the movement of the sleeve to linear motion between predetermined limits.

The blades may be laid forward, flat against the sleeve for storage purposes. Some, preferably half of the blades may be contoured so that when an airstream moves from the free end to the fixed end of each blade when in the latter position, the specially contoured blades will tend to lift. This feature enables the blades to pivot into a conical shape for producing drag.

The invention will now be described by way of example, with reference to the accompanying drawings, in which:
Figure 1a is a side view of a towed body and drag-producing aerodynamic device when in a position suitable for storage;
Figure 1b is a rear view of the aerodynamic device of Figure 1a;
Figure 2a is a side view of the towed body and aerodynamic device when being towed; and
Figure 2b is a rear view of the aerodynamic device of Figure 2a.

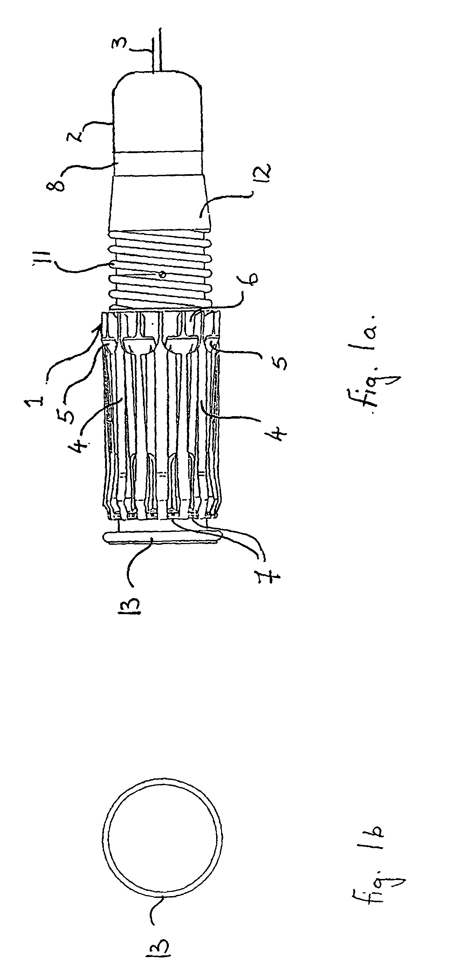

Referring to Figure 1a, the drag-producing aerodynamic device, indicated generally by the reference numeral 1, is attached to the body 2 which is to be towed. Towing cable 3 connects body 2 to the towing aircraft (not shown). The point of attachment of towing cable 3 to body 2 is not restricted to that shown in the drawings.

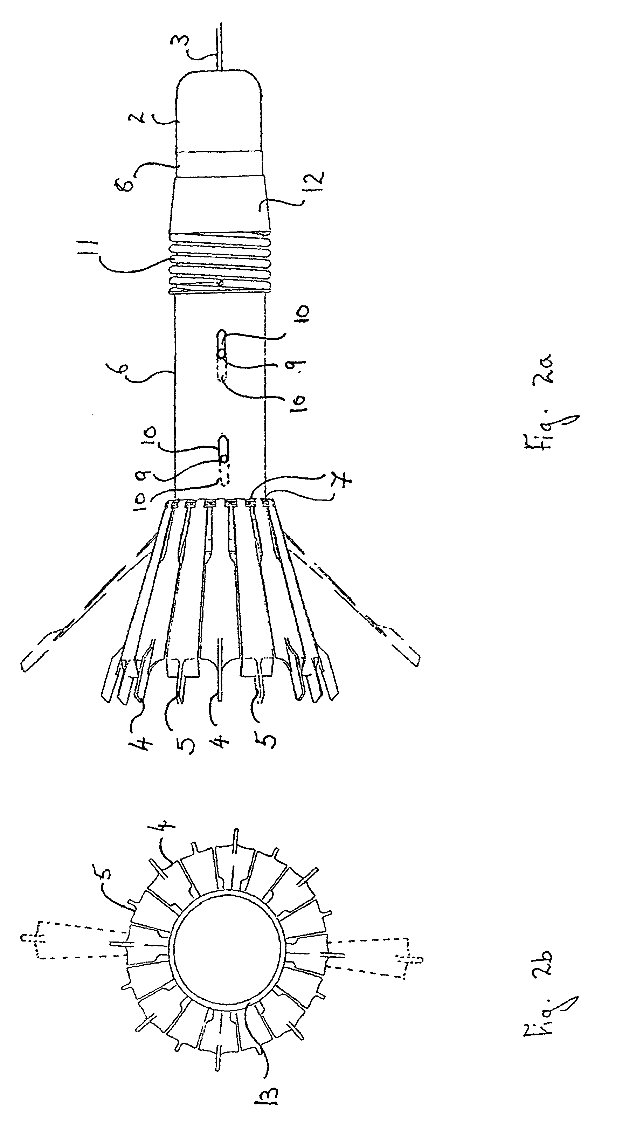

The drag-producing structure of the aerodynamic device 1 incorporates two kinds of blade, 4 and 5. Blades 4 are alternately mounted with blades 5 around the circumference of a slidable sleeve 6 such that blades 4 lie outermost. The blades, 4 and 5, are pivotably attached at one end portion to the slidable sleeve by hinge means 7. Sleeve 6 is mounted coaxially to the main tubular body 8 of the device and can slide axially relative to body 8. Sleeve 6 is constrained to move between limits imposed by lugs 9 attached to the main tubular body 8 of the device, and which lie in slots 10 in the sleeve 6. This arrangement, shown in Figure 2a, also prevents rotation of the sleeve 6 about body 8. The sleeve 6 rests against resilient means in the form of a helical spring 11, the other end of which rests against collar 12. Ring 13 is securely mounted onto the tubular body 8. The volume occupied by this configuration is a minimum for this particular towed body 2 and aerodynamic device 1, and so this configuration is suitable for storage of the body and device.

When in storage, the towed body 2 and device 1 are kept inside a storage container (not shown) until the pilot of the towing aircraft releases them from the container by e.g. pressing a button in the cockpit. The towed body 2 and device 1 emerge from the storage container backwards i.e. ring 13 emerges first. The design of blades 5 is such that, on release of the body and aerodynamic device, the airstream moving under these blades exerts pressure on the underside of each blade sufficient to lift each free end portion. Consequently, blades 4 are raised by blades 5. The blades 4 and 5 pivot about their points of attachment on sleeve 6 until they turn over and the blades come into contact with ring 13, as illustrated in Figure 2a. The blades shown by broken lines in Figures 2a and 2b represent the position of the blades when the dynamic air pressure acting on the aerodynamic device 1 is at or below a known minimum, such as happens when the towing aircraft is travelling at low speed. In this configuration, the sleeve 6 is in substantially the same position on the main body 8 of the device as it is in Figure 1a, and each lug 9 rests against one end of its slot 10, as shown by broken lines. The blades define a substantially conical shape which provides the maximum possible cross-sectional area for producing drag. Thus, at low air speeds, the drag-producing aerodynamic device produces maximum available drag.

If the air pressure acting on the blades increases, such as happens when the towing aircraft increases speed, the additional pressure produces a turning moment which acts on the free end portion of each blade, which therefore tries to pivot about its point of contact on ring 13. However, the other end portions of the blades are connected to the sleeve 6, and so these end portions are constrained to move linearly with the sleeve. Thus, a pressure increase causes the sleeve to move against the spring 11 and, as the blades 4 and 5 maintain contact with ring 13, the free end portions of the blades define a circle of smaller diameter. The blades occupy an equilibrium position, as shown by the solid lines of Figure 2a, where the turning moment caused by air pressure acting on the free end portions of the blades is equal and opposite to the turning moment acting on the other end portions, caused by the restoring force of compressed spring 11 acting on sleeve 6. Thus, as shown in Figure 2b, an increase in speed causes a reduction in the cross-sectional area producing drag. In fact, in this drawing, the blades shown in solid lines define a minimum cross-sectional area producing drag and form an almost continuous conical surface. The sleeve is restrained from moving further forward by lugs 9 which abut the other end of respective slots 10.

If the towing aircraft then decreases speed, the air pressure acting on the blades decreases. The restoring force produced by the compressed spring 12 tends to move sleeve 6 backwards towards ring 13. As the sleeve moves, the blades define a circle of increasing diameter thereby increasing the cross-sectional area producing drag until equilibrium is achieved once more.

There are a number of variable parameters associated with the drag-producing aerodynamic device. Such parameters include the size and shape of the blades, the diameter of the ring, the length of the slot on the sleeve and the spring constant of the helical spring. Each parameter may be adjusted to suit the performance of the particular towing aircraft.

Suitable material for the manufacture of the blades is polycarbonate material. The ring may be manufactured from poly-tetra-fluoro-ethylene (PTFE). The sleeve and tubular body may be made of aluminium and the helical spring may be steel.

Variations may be made without department from the scope of the invention. For instance, materials other than those mentioned above may be used. The invention need not be used by aircraft, as underwater towing by submarines may be possible.

## Claims

1. A drag-producing device (1) for providing stability to a towed body (2), the device (1) comprising:-
a sleeve (6); and
a plurality of drag-producing blades (4, 5) each pivotably attached at one end portion (7) to the sleeve (6), the other end portions lying on a circle, each blade (4, 5) extending rearwardly in use;
**characterised in that** the device (1) further comprises resilient means (11) resting against the sleeve (6), the sleeve (6) moving forwardly against the force of the resilient means (11) as drag acting on the blades (4, 5) increases thereby reducing the diameter of the circle on which the other end portions lie and hence the drag.

2. A device as claimed in claim 1, wherein the resilient means (11) comprises a helical spring.

3. A device as claimed in claim 2, wherein the sleeve (6) surrounds a member (8) extending from the towed body (2).

4. A device as claimed in claim 3, wherein the member (8) includes a collar (12), the helical spring (11) being retained between the sleeve (6) and the collar (12) on the member (8).

5. A device as claimed in claim 3 or 4, wherein the member (8) has a coaxially mounted protruding ring (13) which co-operates with cams on the blades (4, 5).

6. A device as claimed in any one of claims 3 to 5, further including means (9, 10) for defining the extend of movement of the sleeve (6).

7. A device as claimed in claim 6, wherein the means (9, 10) for defining the extend of the movement of the sleeve (6) comprises at least one lug (9) formed on the member (8) which engages with at least one slot (10) formed in the sleeve (6).

8. A device as claimed in any one of the preceding claims, wherein the blades (4, 5) can be arranged to lie with their free end portions nearer to the towed body (2) than the pivotable end portions (7).

9. A device as claimed in any one of the preceding claims, wherein a proportion of the blades (5) are contoured such that air moving from the free end portion to the pivotable end portion (7) causes each of said blades (5) to pivot about its point of attachment.

10. A towed body including a device as claimed in any one of the preceding claims.

## Patentansprüche

1. Einen Luftwiderstand erzeugende Vorrichtung (1), die einen Schleppkörper (2) stabilisiert, wobei die Vorrichtung (1) folgende Teile umfaßt:
eine Hülse (6); und
mehrere, einen Luftwiderstand erzeugende Flossen (4, 5), die jeweils mit einem Endabschnitt (7) an der Hülse (6) schwenkbar angelenkt sind, wobei die anderen Endabschnitte auf einem Kreis liegen, wobei jede Flosse (4, 5) sich im Betrieb nach hinten erstreckt;
**dadurch gekennzeichnet, daß** die Vorrichtung (1) außerdem elastische Mittel (11) aufweist, die gegen die Hülse (6) wirken, wobei sich die Hülse (6) nach vorn gegen die Wirkung der elastischen Mittel (11) bewegt, wenn der Luftwiderstand, der auf die Flossen (4, 5) wirkt, sich erhöht, wodurch der Durchmesser des Kreises vermindert wird, auf dem die anderen Endabschnitte der Flossen liegen, wodurch demgemäß der Luftwiderstand vermindert wird.

2. Vorrichtung nach Anspruch 1, bei welcher die elastischen Mittel (11) aus einer Schraubenfeder bestehen.

3. Vorrichtung nach Anspruch 2, bei welcher die Hülse (6) einen Körper (8) aufweist, der sich aus einem Schleppkörper (2) heraus erstreckt.

4. Vorrichtung nach Anspruch 3, bei welcher der Körper (8) einen Kragen (12) aufweist und die Schraubenfeder (11) zwischen der Hülse (6) und dem Kragen (12) auf dem Körper (8) abgestützt ist.

5. Vorrichtung nach den Ansprüchen 3 oder 4, bei welcher der Körper (8) einen koaxial gelagerten vorstehenden Ring (13) aufweist, der mit Nockenbahnen auf den Flossen (4, 5) zusammenwirkt.

6. Vorrichtung nach einem der Ansprüche 3 bis 5, welche außerdem Mittel (9, 10) aufweist, die das Ausmaß der Bewegung der Hülse (6) definieren.

7. Vorrichtung nach Anspruch 6, bei welcher die Mittel (9, 10), die das Ausmaß der Bewegung der Hülse (6) definieren, wenigstens einen Ansatz (9) aufweisen, der auf dem Körper (8) ausgebildet ist und in wenigstens einen Schlitz (10) eingreift, der in der Hülse (6) vorhanden ist.

8. Vorrichtung nach einem der vorhergehenden Ansprüche, bei welcher die Flossen (4, 5) so angeordnet werden können, daß sie mit ihren freien Endabschnitten näher an dem Schleppkörper (2) liegen als die schwenkbar gelagerten Endabschnitte (7).

9. Vorrichtung nach einem der vorhergehenden Ansprüche, bei welcher ein Abschnitt der Flossen (5) derart gestaltet ist, daß Luft, die von dem freien Endabschnitt nach dem schwenkbaren Endabschnitt (7) strömt, eine Schwenkung jeder Flosse (5) um ihren Anlenkpunkt bewirkt.

10. Schleppkörper mit einer Vorrichtung gemäß einem der vorhergehenden Ansprüche.

## Revendications

1. Dispositif aérodynamique avec traînée (1) pour fournir la stabilité à un corps remorqué (2), le dispositif (1) comprenant :
une manche (6) ; et
une pluralité de pales avec traînée (4, 5) chacune fixée de façon à être pivotées à l'extrémité (7) de la manche (6), les autres extrémités étant disposées en cercle, chaque pale (4, 5) se prolongeant vers l'arrière en fonctionnement ;
**caractérisé en ce que** le dispositif (1) comprend en outre les moyens résilients (11) reposant contre la manche (6), la manche (6) se déplaçant vers l'avant contre la force des moyens résilients (11) étant donné que la traînée agissant sur les pales (4, 5) augmente de ce fait en réduisant le diamètre du cercle sur lequel les autres extrémités se trouvent et par conséquent la traînée.

2. Dispositif selon la revendication 1, dans lequel les moyens résilients (11) comprennent un ressort hélicoïdal.

3. Dispositif selon la revendication 2, dans lequel la manche (6) entoure un élément (8) se prolongeant à partir du corps remorqué (2).

4. Dispositif selon la revendication 3, dans lequel l'élément (8) comprend un collier (12), un ressort hélicoïdal (11) étant retenu entre la manche (6) et le collier (12) sur l'élément (8).

5. Dispositif selon la revendication 3 ou 4, dans lequel l'élément (8) est doté d'un anneau saillant (13) monté de façon coaxiale qui coopère avec les cames sur les pales (4, 5).

6. Dispositif selon une quelconque des revendications 3 à 5, comprenant en outre des moyens (9, 10) pour définir l'étendue du mouvement de la manche (6).

7. Dispositif selon la revendication 6, dans lequel les moyens (9, 10) pour définir l'étendue du mouvement de la manche, comprend au moins une patte (9) formée sur l'élément (8) qui s'engage dans au moins une fente (10) formée sur la manche (6).

8. Dispositif selon une quelconque des revendications précédentes, dans lequel les pales (4, 5) peuvent être disposées de façon à ce que leurs extrémités libres se trouvent plus près du corps remorqué (2) que les extrémités articulées (7).

9. Dispositif selon une quelconque des revendications précédentes, dans lequel un certain nombre de pales (5) sont contournées de sorte que l'air se déplaçant de l'extrémité libre vers l'extrémité articulée (7) fait pivoter chacune desdites pales (5) par rapport à son point d'attache.

10. Corps remorqué comprenant un dispositif selon une quelconque des revendications précédentes.
